# EUROPEAN PATENT SPECIFICATION

(11) **EP 1 438 999 B1**
(45) Date of publication and mention of the grant of the patent: **24.10.2007**
(21) Application number: 03425010.0
(22) Date of filing: 13.01.2003
(51) Int. Cl.: B01D 46/24, B01D 35/30

(54) **A filter for airborne particles with a slide hatch.**
Filter für in der Luft befindliche Teilchen mit einer Seitenklappe
Filtre pour matières suspendues dans l'air avec une trappe latérale

(43) Date of publication of application: 21.07.2004
(73) Proprietor: WAM S.p.A., 41030 Ponte Motta Cavezzo (Modena) (IT)
(72) Inventor: Marchesini, Vainer, 41030 San Prospero (Modena) (IT)
(74) Representative: Gotra, Stefano

(56) References cited:
- US-A- 1 965 999
- US-A- 2 388 668
- US-A- 2 678 109
- US-A- 2 788 860
- US-A- 3 595 398
- US-A- 5 037 461

## Description

The invention is specifically though not exclusively applicable in filters for removing dust from air.

The prior art teaches circular filters for removal of dust from air, having a side hatch predisposed on the support and container body of the filtering elements (e.g. US-A-2678109).

The hatch affords easy access to the inside of the filter for reasons of inspection, maintenance and so on.

The main aim of the present invention is to realise a filter with a hatch which guarantees an efficient seal against the air and the filtered dust.

A further aim of the invention is to realise a filter which is simple and economical and has a hatch which can be opened and closed simply and rapidly and with little effort.

A further aim is to make available a filter which obviates the risk of the formation of even a very small quantity of dust in comers or other areas or discontinuities due to the presence of the hatch.

These aims and advantages and others besides are all attained by the invention as it is characterised in the appended claims.

Further characteristics and advantages of the present invention will better emerge from the detailed description that follows of a preferred but non-exclusive embodiment of the invention, illustrated purely by way of a nonlimiting example in the accompanying figures of the drawings, in which:
figure 1 is a side view of an embodiment of a filter, made according to the invention, with the hatch closed;
figure 2 is the filter of figure 1 with the hatch open;
figure 3 shows further details of the hatch illustrated in figures 1 and 2..

With reference to the figures of the drawings, 1 denotes in its entirety a dust filter comprising a tubular lateral body 2, in the embodiment cylindrical, which contains filter elements 3 which are supported on a wall which closes the body 2 at an end thereof. The filter 1 comprises other elements, such as for example a compressed-air device for periodically cleaning the filter elements 3, not illustrated because it is not inherent to the invention.

The body 2 is provided with a curved lateral wall, in the illustrated embodiment cylindrical in shape, which has a rectangular opening which is sealedly closed by a hatch 4, also curved in shape, which is preferably cylindrical in order to follow the conformation of the wall on which the aperture is afforded.

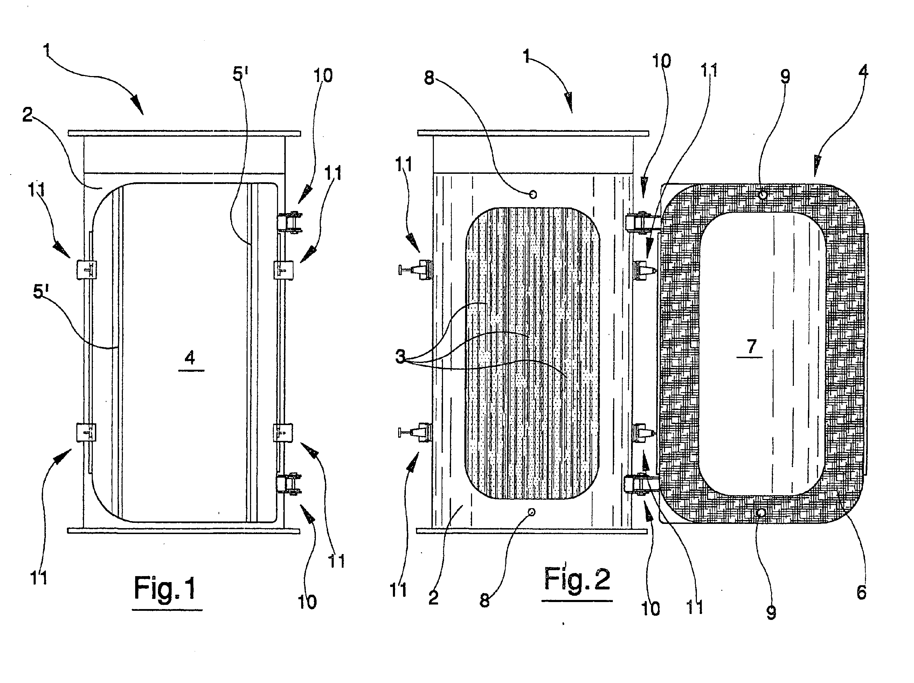

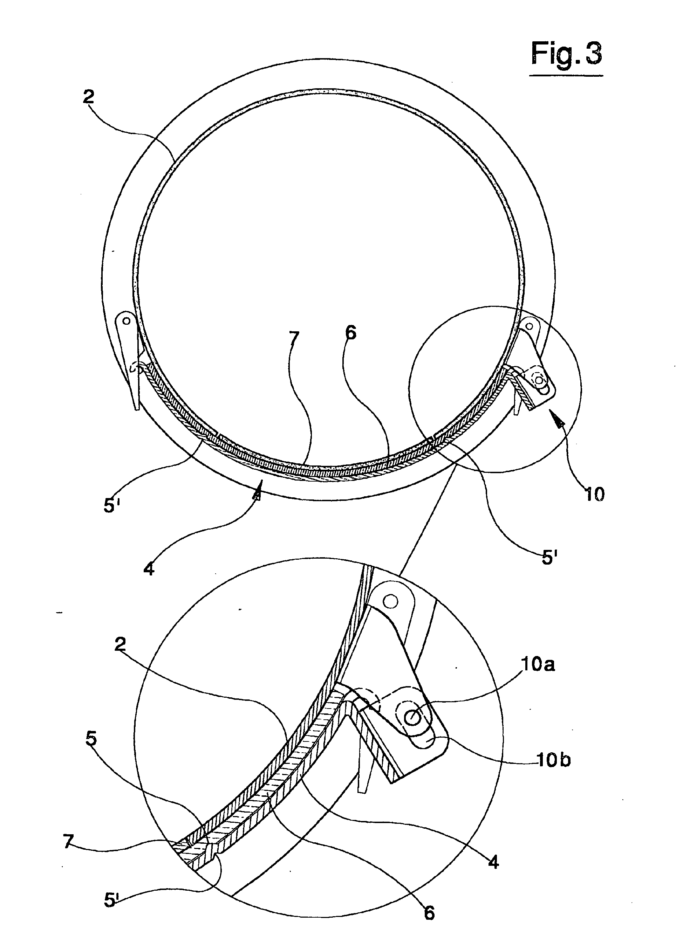

The hatch 4 is internally provided with two reliefs 5 projecting internalwise of the filter, which reliefs 5, when the hatch 4 is in a closed position (figures 1 and 3) are extended, preferably continuously, along two sides of the edge of the opening, in a parallel direction to the axis of the lateral body 2. Each relief 5 is made of an internalwise bending of the hatch 4 to which corresponds, on an external side, a recess 5'.A seal 6 is predisposed on each of the recesses 5' which interacts contactingly with the edge of the opening and creates therewith a seal. The seal 6 is interpositioned between the reliefs 5 and the edge of the opening. In the illustrated embodiment a single seal 6, larger than the edge of the opening and superposed on the reliefs, is predisposed; it is basically a membrane extended between the two reliefs 5 and beyond.

On the internal side of the hatch 4 a seal cover 7 is located, preferably having also a seal retainer function, a perimeter of which is comprised internally of the reliefs 5 and situated in proximity thereof. The seal cover 7, which is fixed on the hatch 4, follows the shape of and is just slightly smaller than the opening.

The seal cover 7 is curved at more or less the same curvature as the wall on which the opening is afforded, so that it matches the aperture perfectly.

On each of the two sides of the edge of the opening not involved with the reliefs 5 (with reference to figure 2, these two sides are in fact the top and bottom sides), a centring system for the hatch in the closed position is provided. This centring system, in the illustrated embodiment, comprises a guide pin 8 on each side (top and bottom) solidly constrained on the body 2 and a corresponding seating 9 made in the hatch 4. The hatch opens and closes by means of a hinged side thereof, hinged on the walls of the body 2 with a rotation axis which is parallel to the axis of the tubular body 2. Rotation of the hatch 4 is achieved by means of two coaxial pivot-seating rotatable pairs 10, in which the pivot 10a and the seating 10b of each couple are reciprocally mobile in a transversal direction to the rotation axis. In the illustrated embodiment each pivot 10a is solidly constrained to the body and each seating 10b is afforded on the hatch 4. Each seating 10b is an elongated slot allowing reciprocal motion between the two elements of the rotating couple.

On the hinged side and the opposite side means for removably closing are provided, which keep the hatch 4 in the closed position. The means for removably closing comprise, on each side, one or more hooking organs 11 with known-type toggle mechanisms.

Internally of the filter 1, at the hatch 4 position, there are no recesses, cavities or any other types of irregularity or discontinuity in which dust can gather and build up, which guarantees against risks of fire or mould. In particular, the seal cover 7 is conformed and arranged in such a way that, when the hatch 4 is sealedly closed, the internal surface of the hatch 4 comprised between the two opposite lateral zones defined by the reliefs 5 (this internal surface is substantially the surface of the seal cover 7) in effect constitutes the practically continuous prolongation of the internal surface of the body 2 at the edge of the opening (see figure 3). The seal cover 7 enters practically snugly into the opening and exhibits a thickness which reduces to a minimum and indeed preferably eliminates the little "step" which can be created internally of the filter, along the edge of the opening, between the seal cover 7 and the curved wall of the body 2. The centring system (for example with pin-housing couplings 8 and 9) between the hatch 4 and the body 2 guarantees reaching a position of closure of the hatch 4 in which the "step" is eliminated. The hatch 4 is hinged with a variable capacity, the hinged edge of the hatch 4 being able to displace thanks to the reciprocal mobility of the elements of the pivot-housing couplings 10a-10b. This eases the operations necessary for reaching the above-mentioned sealed closure position of the hatch 4. Furthermore, the predisposition of hooking organs 11 operating on the two opposite sides of the hatch 4 provides a very good seal, uniform over the whole perimeter of the hatch 4.

## Claims

1. A filter for airborne particles comprising a tubular body (2) containing filter elements (3) which is provided with at least one curved wall having an opening which is sealedly closed by a hatch (4) which is also curved, **characterised in that** a seal (6) and a seal cover (7) are predisposed on the internal face of the hatch (4), and that the seal (6) and the seal cover (7) fit sn ugly into the opening when the hatch (4) is closed, the seal cover (7) exhibiting a thickness which reduces to a minimum any step between the seal cover (7) and the internal face of the curved wall of the body (2).

2. The filter of claim 1, **characterised in that** the hatch (4) is provided with one or more reliefs (5) which project towards an inside of the filter, which one or more reliefs (5) extend in length, preferably continuously, along at least a part of an edge of the opening, when the hatch (4) is in a closed position; the seal (6) being predisposed on each of the one or more reliefs (5), which seal (6) interacts contactingly with the edge of the opening.

3. The filter of claim 2, **characterised in that** it comprises, on opposite sides of the hatch (4), two of the one or more reliefs (5), extending in length in a parallel direction to an axis of the body (2).

4. The filter of claim 2 or 3, **characterised in that** a perimeter of which seal cover (7) is comprised internally of the one or more reliefs (5) and in proximity thereof.

5. The filter of any one of claims from 2 to 4, **characterised in that** each or the one or more reliefs (5) is realised from a inward folding of the hatch (4); a corresponding recess (5') being created on an outside of the hatch (4).

6. The filter of any one of claims from 2 to 5, **characterised in that** one or more tracts of the edge of the opening do not have the one or more reliefs (5) of the hatch (4) and that a centring system is predisposed on each of the one or more tracts, the centring system being for example constituted by a pin (8) and a guide housing (9).

7. The filter of any one of the preceding claims, **characterised in that** the hatch (4) has a side which is hinged to a wall of the body (2) and has an axis of rotation which is parallel to an axis of the body (2) and that a hinge connecting the wall of the body (2) and the hatch (4) comprises a rotating pair (10) consisting of a pivot (10a) and a seating (10b) which are reciprocally mobile in a transversal direction to the axis of rotation.

8. The filter of any one of the preceding claims, **characterised in that** the hatch (4) has a side which is hinged to the wall with an axis of rotation which is parallel to the axis of the body (2) and **in that** removable means (11) for closing are provided which keep the hatch (4) in a closed position and which operate on the hinged side of the hatch (4) and also on an opposite side to the hinged side.

9. The filter of claim 8, **characterised in that** two centring systems are provided on the two horizontal sides of the hatch (4), which two horizontal sides are not provided with the reliefs (5), for centring the hatch (4) upon closure; the two centring systems preferably consisting of a pin (8) and a reference seating (9).

## Patentansprüche

1. Filter für in der Luft schwebende Teile, enthaltend einen rohrförmigen Körper (2) mit Filterelementen (3), welcher mit wenigstens einer gebogenen Wand versehen ist, aufweisend eine Öffnung, welche abdichtend durch eine ebenfalls gebogene Klappe (4) verschlossen ist, **dadurch gekennzeichnet, dass** eine Dichtung (6) und eine Dichtungsabdeckung (7) an der Innenfläche der Klappe (4) vorgesehen sind, und dass die Dichtung (6) und die Dichtungsabdeckung (7) passrecht in die Öffnung greifen, wenn die Klappe (4) geschlossen ist, wobei die Dichtungsabdeckung (7) eine Dicke aufweist, die jede Abstufung zwischen der Dichtungsabdeckung (7) und der Innenfläche der gebogenen Wand des Körpers (2) auf ein Minimum reduziert.

2. Filter nach Patentanspruch 1, **dadurch gekennzeichnet, dass** die Klappe (4) mit einem oder mehreren Reliefs (5) versehen ist, welche zu einen Innenseite des Filters hervorstehen, und welche ein oder mehrere Reliefs (5) sich in der Länge vorzugsweise kontinuierlich entlang wenigstens von einem Teil einer Kante der Öffnung erstrecken, wenn die Klappe (4) sich in einer geschlossenen Position befindet; wobei die Dichtung (6) an jedem einen oder mehreren Reliefs (5) vorgesehen ist, welche Dichtung (6) im Kontakt mit der Kante der Öffnung zusammenwirkt.

3. Filter nach Patentanspruch 2, **dadurch gekennzeichnet, dass** er an entgegengesetzten Seiten der Klappe (4) zwei von dem einen oder mehreren Reliefs (5) enthält, die sich in der Länge in einer parallelen Richtung zu einer Achse des Körpers (2) erstrecken.

4. Filter nach Patentanspruch 2 oder 3, **dadurch gekennzeichnet, dass** ein Umfang der Dichtungsabdeckung (7) innerhalb von einem oder mehreren Reliefs (5) enthalten ist und dicht an denselben liegt.

5. Filter nach einem beliebigen der Patentansprüche von 2 bis 4, **dadurch gekennzeichnet, dass** jedes oder eins oder mehrere Reliefs durch ein Biegen der Klappe (4) nach innen hergestellt ist; wobei an der Aussenseite der Klappe (4) eine entsprechende Vertiefung (5') erzeugt wird.

6. Filter nach einem beliebigen der Patentansprüche von 2 bis 5, **dadurch gekennzeichnet, dass** einer oder mehrere Abschnitte der Kante der Öffnung nicht von einem oder mehreren Reliefs (5) der Klappe (4) betroffen sind, und dass ein Zentriersystem an jedem einen oder mehreren Abschnitten vorgesehen ist, wobei das Zentriersystem zum Beispiel aus einem Stift (8) und einer Aufnahmebohrung (9) bestehen kann.

7. Filter nach einem beliebigen der Patentansprüche, **dadurch gekennzeichnet, dass** die Klappe (4) eine Seite hat, welche an eine Wand des Körpers (2) angelenkt ist und eine Drehachse aufweist, welche parallel zu einer Achse des Körpers (2) verläuft, und dass ein die Wand des Körpers (2) und die Klappe (4) verbindendes Scharnier ein Drehpaar (10) enthält, bestehend aus einem Zapfen (10a) und einem Sitz (10b), welche zueinander in einer querverlaufenden Richtung zu der Drehachse beweglich sind.

8. Filter nach einem beliebigen der Patentansprüche, **dadurch gekennzeichnet, dass** die Klappe (4) eine Seite hat, welche mit einer Drehachse an die Wand angelenkt ist, die parallel zu der Achse des Körpers (2) verläuft, und **dadurch**, dass lösbare Mittel (11) zum Schliessen vorgesehen sind, welche die Klappe (4) in einer geschlossenen Position halten, und welche auf der angelenkten Seite der Klappe (4) und auch auf der entgegengesetzten Seite von der angelenkten Seite wirken.

9. Filter nach Patentanspruch 8, **dadurch gekennzeichnet, dass** zwei Zentriersysteme an den beiden horizontalen Seiten der Klappe (4) vorgesehen sind, welche beiden horizontalen Seiten keine Reliefs (5) aufweisen, zum Zentrieren der Klappe (4) bis zum Verschliessen; wobei die beiden Zentriersysteme vorzugsweise aus einem Stift (8) und einer Aufnahmebohrung (9) bestehen.

## Revendications

1. Filtre pour matières suspendues dans l'air comprenant un corps tubulaire (2) contenant des éléments filtrants (3) et étant pourvu d'au moins une paroi courbée ayant une ouverture fermée de manière étanche par une trappe (4) elle-aussi courbée, **caractérisé en ce qu'**un joint (6) et une plaque couvre-joint (7) sont prédisposés sur la face interne de la trappe (4), et que le joint (6) et la plaque couvre-joint (7) s'emboîtent parfaitement dans l'ouverture lorsque la trappe (4) est fermée, la plaque couvre-joint (7) présentant une épaisseur qui réduit au minimum tout surépaisseur entre la plaque couvre-joint (7) et la face interne de la paroi courbée du corps (2).

2. Filtre selon la revendication 1, **caractérisé en ce que** la trappe (4) est pourvue d'un ou plusieurs reliefs (5) saillants vers l'intérieur du filtre, lequel un ou plusieurs reliefs (5) s'étend en longueur, préférablement de manière continue, le long d'au moins une partie d'un bord de l'ouverture, lorsque la trappe 4 se trouve dans une position fermée; le joint (6) étant prédisposé sur chacun du ou des reliefs (5), lequel joint (6) interagissant en contact avec le bord de l'ouverture.

3. Filtre selon la revendication 2, **caractérisé en ce qu'**il comprend, sur des côtés opposés de la trappe (4), deux des un ou plusieurs reliefs (5), s'étendant en longueur dans une direction parallèle à un axe du corps (2).

4. Filtre selon la revendication 2 ou 3, **caractérisé en ce qu'**un périmètre de ladite plaque couvre-joint (7) est compris à l'intérieur desdits un ou plusieurs reliefs (5) et à proximité de ces derniers.

5. Filtre selon n'importe laquelle des revendications 2 à 4, **caractérisé en ce que** chacun desdits un ou plusieurs reliefs (5) est réalisé à partir d'un pli vers l'intérieur de la trappe (4); un renfoncement correspondant (5') étant créé sur l'extérieur de la trappe (4).

6. Filtre selon n'importe laquelle des revendications 2 à 5, **caractérisé en ce qu'**une ou plusieurs parties du bord de l'ouverture ne présentent par un ou plusieurs reliefs (5) de la trappe (4) et **en ce qu'**un système de centrage est prédisposé sur chacune des une ou plusieurs parties, le système de centrage étant par exemple constitué d'un axe (8) et d'un logement de guidage (9).

7. Filtre selon n'importe laquelle des revendications précédentes, **caractérisé en ce que** la trappe (4) présente un côté articulé sur une paroi du corps (2) et présente un axe de rotation parallèle à un axe du corps (2), et **en ce qu'**une articulation reliant la paroi du corps (2) et la trappe (4) comprend un accouplement pivotant (10) consistant en un pivot (10a) et un logement (10b) qui sont réciproquement mobiles dans une direction transversale à l'axe de rotation.

8. Filtre selon n'importe laquelle des revendications précédentes, **caractérisé en ce que** la trappe (4) présente un côté articulé sur la paroi avec un axe de rotation qui est parallèle à l'axe du corps (2) et **en ce que** des moyens amovibles (11) de fermeture sont prévus, lesquels maintiennent la trappe (4) dans une position fermée et opèrent sur le côté articulé de la trappe (4) mais également sur un côté opposé au côté articulé.

9. Filtre selon la revendication 8, **caractérisé en ce que** deux systèmes de centrage sont prévus sur les deux côtés horizontaux de la trappe (4), lesquels deux côtés horizontaux ne sont pas pourvus de reliefs (5), pour centrer la trappe (4) lors de la fermeture; les deux systèmes de centrage consistent préférablement en un axe (8) et un logement de référence (9).
